# EUROPEAN PATENT SPECIFICATION

(11) **EP 1 175 159 B1**
(45) Date of publication and mention of the grant of the patent: **12.11.2003**
(21) Application number: 00927471.3
(22) Date of filing: 28.04.2000
(51) Int. Cl.: A23L 1/317, A23L 1/314

(54) **IMPROVEMENTS TO ACIDIC MEAT PRODUCTS**
VERBESSERUNGEN FÜR SÄURE-FLEISCHWAREN
PERFECTIONNEMENTS DE PRODUITS A BASE DE VIANDE ACIDES

(30) Priority: 30.04.1999 GB 9910139
(43) Date of publication of application: 30.01.2002
(73) Proprietor: BERNARD MATTHEWS PLC, Norwich Norfolk NR9 5QD (GB)
(72) Inventor: MATTHEWS, Bernard, Trevor, Norwich, Norfolk NR9 5QD (GB); KOPPERS, Werner, D-26180 Rastede (DE); BÜSE, Friedrich, D-26215 Oldenburg (DE); RICHELMANN, Hans-Jorg, D-26125 Oldenburg (DE); JOLL, David, John, Norwich, Norfolk NR9 5QD (GB)
(74) Representative: Crump, Julian Richard John
(86) International application number: GB0001656
(87) International publication number: WO00065936

(56) References cited:
- EP-A- 0 029 503
- EP-A- 0 478 526
- WO-A-99/21438
- DD-A- 204 837
- DE-A- 2 210 500
- DE-A- 19 752 249
- DE-C- 3 726 204
- DE-C- 4 230 434
- DE-U- 9 319 934
- GUINEE T. ; CORCORAN M. : "The development of cheese-meat salami products" FARM & FOOD, vol. 4, no. 2, 1994, pages 7-9, XP000929785

## Description

The present invention relates to acidic meat products, particularly fermented meat products such, for example, as salami-type meat products. The present invention has particular reference to a low fat, fermented or acidified meat product and a process for making such a product.

Salami is traditionally made from lean, raw pork and/or beef meat and fat such as pork back fat. These components are mixed and comminuted, and salt, spices, additives and starter cultures are added. The mixture is then stuffed into casings and fermented and dried in air-conditioned rooms. During the fermenting and drying process, the product loses about 20 to 30% of its initial weight. The product may optionally be smoked.

The inclusion of fat in the recipe for salami assists in achieving an even weight loss during the drying stage. The lean meat and fat components are typically comminuted to a grain size in the range 1 to 5mm, and an even distribution of fat particles within a matrix of lean meat imparts a characteristic appearance to products such as salami. However, the inclusion of fat particles in the product means that the product has a relatively high fat content and calorific value. This exacerbated by the drying stage, in which water is lost from the product by drying, thus increasing the relative proportion of fat in the product.

DE-A-4230434 discloses a salami type product in which powdered soft cheese such, for example, as camembert is added at a temperature of about -24°C to a salami mix of lean meat and fat. The soft cheese is pulverised to a grain dimension of about 0.1mm, and is added to the product to impart a distinctive flavour. DE-A-4230434 discloses the use of an acid former and a flavour former as starter cultures. The cheese particles are invisible in the final product. No more than about 3%wt cheese should be added to the meat to avoid malfermentation.

It is an object of the present invention to provide a novel, acidic meat product.

Another object of the present invention is to provide a low fat, fermented or acidified meat product.

A further object of the present invention is to provide a fermented or acidified meat product which visually and/or organoleptically resembles traditional salami.

Further objects of the present invention will be apparent from the following description of the invention.

According to one aspect of the present invention there is provided a low fat, acidic meat product comprising a fermented or acidified mixture of lean meat particles and visible particles of pre-fermented, cultured dairy product.

According to another aspect of the present invention there is provided a process for making a low fat, acidic meat product, said process comprising pre-fermenting a cultured dairy product, quenching said pre-fermentation step, dividing said pre-fermented dairy product to form smaller particles, mixing said particles with lean meat particles and forming said mixture into a coherent body, inoculating said body with a starter culture and allowing said product to ferment or acidifying said body; wherein said particles of dairy product are visible in the final product.

The meat product of the present invention may optionally comprise salt and/or spices or other flavouring agents. Preferably however the meat product is free, or substantially free, of fat particles. The lean meat used in the product is preferably very lean, and thus the only significant source of fat in the product is the cultured dairy product. The product of the invention thus has a significantly lower fat content than traditional fermented meat products such as salami. Typically, a product in accordance with the invention may have a fat content in the range 5 to 10% by weight.

The product of the invention nevertheless has the appearance of a traditional fermented meat product, in that the visible particles of cultured dairy product may have the same or a similar appearance to the fat particles in traditional salami.

Preferably the pre-fermented, cultured dairy product may comprise one or more products selected from cheese, yogurt, buttermilk, soured cream milk, soured milk, fermented whey and kefir. Various types of cheese are suitable for use in the invention, including hard cheeses and soft cheeses, and also processed cheeses. The term "soured cream milk" includes soured cream, sauerrahm, schmand and creme fraiche; "soured milk" includes sauermilch and dickmilch. Preferably the prefermented dairy product comprises cheese and/or yogurt. Said cheese and/or yogurt may be manufactured according to standard cheese or yogurt manufacturing techniques by inoculation with suitable starter cultures. Prior to admixture of the dairy product with the meat however the fermentation activity of the dairy product is inactivated by heating. For example, the pre-fermentation of the dairy product may be quenched by heating it to a temperature of 70 to 75°C or more. If the pre-fermentation of the dairy product is not inactivated prior to admixture with said meat, then "malfermentation" may result, with the generation of unwanted gases such as oxygen and carbon dioxide within the product, in turn, leading to the production of small, gas-escape holes in the final product.

The texture of the particles of dairy product may be improved by the addition of one or more texture improving agents such, for example, as whey protein, egg white, vegetable protein and/or hydrocollids. Said texture improving agents may be added to the dairy product before or after heat treatment. In a preferred embodiment, a mixture of yoghurt and cheese is used which is then mixed with a texture improving agent, extruded through a stuffing horn into a flexible, shirred casing and then cooked to quench the pre-fermentation as mentioned above. The dairy product may be cooked in steam.

Preferably, the cheese or yogurt is mechanically divided after fermentation and heat treatment to a particle size in the range 0.5 to 10mm, preferably 1 to 5mm.

In some embodiments a pre-biotic additive such as a non-digestible carbohydrate (e.g Inulin) may be added, for example in the amount 2-7%wt, to the pre-fermented dairy product.

Said particles of pre-fermented dairy product may constitute 5 to 35% by weight of the mixture, preferably 10 to 20% wt.

Said lean meat may comprise raw, red meat. Said red meat may be selected from beef, pork, veal, lamb and mutton. Alternatively, or additionally, said meat may comprise raw poultry meat such, for example, as chicken or turkey meat. It will be appreciated by those skilled in the art that when raw meat is being handled, especially meat such as pork and chicken/poultry, great care must be taken to ensure that the meat is free, or substantially free, of injurious microorganisms such, for example, as salmonella. The meat should therefore be prepared in a suitable hygienic, "high risk" environment.

Said pre-fermented dairy product may be comminuted and then admixed with the meat in a frozen state. Preferably, however, the mechanical reduction of the dairy product is performed in the presence of the lean meat, so that the dairy product and meat are comminuted and mixed together simultaneously. This may be done in a bowl-chopper, for example. Typically, the product is frozen to a temperature in the range -15 to -25°C, typically about -20°C, for admixture to the meat.

The mixture of meat and pre-fermented dairy product may then be inoculated with starter cultures of the kind known to those skilled in the art such as traditional salami cultures. A variety of suitable cultures are available commercially, including acid cultures which act to lower the pH of the product, and cultures which de-nature protein to form amino acids, thus impart a characteristic flavour to the final product.

Said inoculated mixture of meat and cultured dairy product may be stuffed into shirred casings of the kind known in the art such as water-permeable casings to form sausages. Alternatively, the mixture may be formed, for example by pressing into a coherent body having a desired shape. For example, said body may have a sausage shape or a half round, bread shape. Sausage-shaped configurations are preferred, with typical diameters in the range 10 to 120mm.

The product is then incubated to encourage fermentation of the product. Typically, the product may be incubated at a temperature in the range 15 to 25°C, e.g. about 20°C. Incubation may be conducted in an environment having a relative humidity in the range 85 to 100%.

After incubation, the product may be dried and aged at a temperature in the range 15 to 20°C, under a relative humidity of about 70 to 85%.

Optionally, the product may be smoked during the drying/aging stage. Alternatively, the product may be air-dried and inoculated with a cultured mould.

Alternatively, the mixture of meat and pre-fermented dairy product may be acidified with a suitable acidifying agent in the matrix of the salami-type product, which acts to gel the meat in a similar fashion to lactic acid produced by fermentation. As an acidifying agent may be used glucono-delta-lactone (GDL) which imparts a slightly different organoleptic quality to the product as compared with traditional fermentation. GDL produces gluconic acid in the meat which serves as a gelling agent like lactic acid. In some embodiments about 0.1 - 5%wt of acidifying (gelling) agent maybe used, preferably 0.5 - 2%wt. For instance, 0.5%wt, 1.0%wt or 1.5%wt GDL may be added to the meat/dairy product mixture. Those skilled in the art will appreciate that the acidity of the acidifying agent must be sufficient to destroy all harmful and potentially harmful microorganisms in the meat.

The acidified mixture may then be treated as described above, for example by moulding , shaping or stuffing into casings.

The final product may be packaged for retail. In some embodiments, the product may be sliced.

Following is a description by way of example only with reference to the accompanying drawings of methods of carrying the present invention into effect.

### In the drawings:-

Figure 1 shows an acidic meat product in accordance with the present invention, which product is stuffed into a sausage casing and has been cut to show a cross-section through the product.

Figure 2 shows an individual slice of the product of figure 1.

Figure 3 is a flow diagram of a process in accordance with the present invention for making a fermented meat product.

### Example 1

### Fat Reduced Turkey Salami

A fat reduced turkey salami product in accordance with the present invention is made with the following ingredients:-

| | |
|---|---|
| Turkey Thigh Meat | 90kg |
| Processed Cheese | 10kg |
| Curing Salt | 2,8kg |
| Pepper | 0,2kg |
| Starter Culture | 0,050kg |
| Total | 103,05kg |

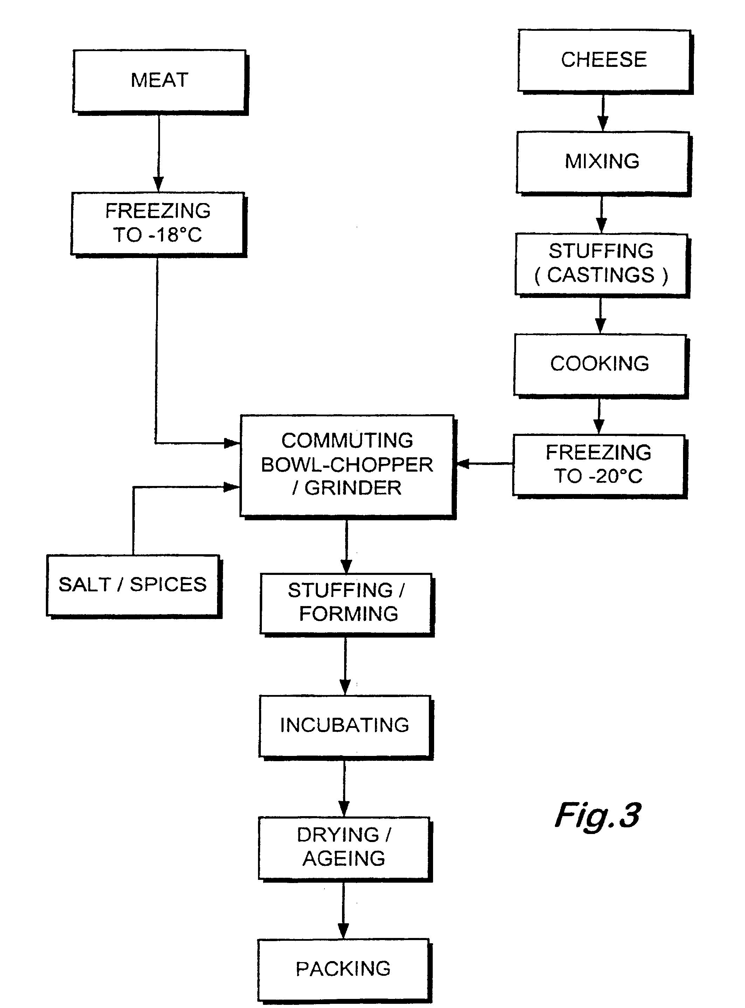

With reference to figure 3 of the accompanying drawings, the fat reduced turkey salami is made by breaking up the processed cheese and stuffing it into shirred casings for cooking. The processed cheese in the casings is cooked at about 75°C for sufficient time to inactivate any live cultures within the cheese. Said cheese is then frozen to a temperature of about -20°C and the casings are removed.

Said turkey thigh meat is frozen to a temperature of about -18°C and is then mixed with the frozen processed cheese in a bowl-chopper or grinder. Said bowl-chopper or grinder is operated to mix the cheese with the meat and to commute the mixture to a grain size of about 1 to 5mm. Said curing salt and pepper is added to the cheese/meat mixture in the bowl-chopper or grinder during mixing. The commuted mixture of cheese and meat is also mixed with said starter culture. Whilst still in the bowl-chopper or grinder. In this example, the starter culture is a mixture of *P.pentosaceus* and *S.xylosus* which is available from Messrs Chr. Hansen, Denmark under the trade name "Flora Cam".

The inoculated mixture is then stuffed into stirred casings and incubated at a temperature of about 20°C under a relative humidity of about 85 to 100%. After incubation, the product is dried and aged at a temperature in the range 15 to 20°C under a relative humidity of about 70 to 85%.

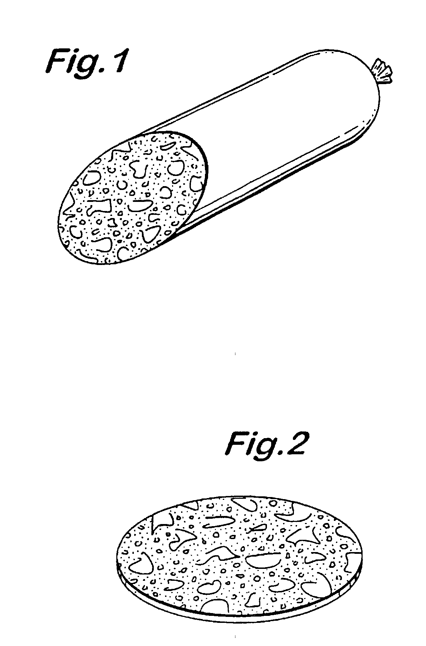

After aging, the product resembles a traditional salami product as illustrated in figure 1, and may optionally be sliced as shown in figure 2. The product, sliced or unsliced, is then packaged for retail.

### Example 2

As an alternative, yogurt may be substituted for the processed cheese. The texture of said yogurt may be improved by mixing it with a gel-forming whey protein.

### Example 3

In a further alternative, a mixture of cheese and yogurt may be used in the product. In this case, the yogurt and cheese are mixed together prior to stuffing into casings fur cooking. An example of a suitable yoghurt/cheese mixture is as follows:

| | |
|---|---|
| Processesd cheese | 53,0 kg |
| Yoghurt | 33,0 kg |
| Whey protein | 13,0 kg |
| Salt | 1,0 kg |
| Total | 100,0 kg |

The whey protein (PSMD-135 from MD Foods, Denmark) works as a texture improving agent.

## Claims

1. A low fat,acidic meat product comprising a fermented or acidified mixture of lean meat particles and visible particles of pre-fermented, cultured dairy product.

2. A meat product as claimed in claim 1, wherein said pre-fermented, cultured dairy product comprises one or more products selected from cheese, yoghurt, buttermilk, soured cream milk, soured milk, fermented whey and kefir.

3. A meat product as claimed in claim 1, wherein said pre-fermented, cultured product comprises cheese and/or yoghurt.

4. A meat product as claimed in claim 1, claim 2 or claim 3, wherein the particles of pre-fermented cultured dairy product have a particle size in the range 0.5 to 10mm.

5. A meat product as claimed in any preceding claim wherein the particles of cultured dairy product comprise one or more texture improving agents.

6. A meat product as claimed in any preceding claim wherein said particles of pre-fermented, cultured dairy product comprise a pre-biotic additive.

7. A meat product as claimed in any preceding claim wherein said particles of pre-fermented, cultured dairy product constitute 5 to 35% by weight of the mixture.

8. A meat product as claimed in any preceding claim wherein said product comprises a sausage stuffed into a shirred casing.

9. A process for making a low fat, acidic meat product, said process comprising pre-fermenting a cultured dairy product, quenching the pre-fermentation step, dividing said pre-fermented dairy product to form smaller particles, mixing said particles with lean meat particles, forming said mixture into a coherent body, inoculating said body with a starter culture and allowing said product to ferment or acidifying said body with an acidifying agent; wherein said particles of said dairy product are visible in the final product.

10. A process as claimed in claim 9, wherein said cultured dairy product comprises one or more products selected from cheese, yoghurt, buttermilk, soured cream, soured milk, fermented whey and kefir.

11. A process as claimed in claim 9 or claim 10, wherein said cultured dairy product comprises cheese and/or yoghurt.

12. A process as claimed in claim 9, claim 10 or claim 11, wherein said cultured dairy product is fermented by inoculation with a suitable starter culture and quenched prior to admixture with the meat by heating.

13. A process as claimed in claim 12, wherein the pre-fermentation of the dairy product is quenched by heating it to a temperature in the range of 70-75°C or more.

14. A process as claimed in any of claims 9 to 13, wherein the dairy product is mechanically divided after fermentation and quenching to a particle size in the range of 0.5 to 10mm.

15. A process as claimed in any of claims 9 to 14 further comprising admixing one or more texture improving agents with the dairy product.

16. A process as claimed in claim 15, wherein said one or more texture improving agents are added to the dairy product before quenching the pre-fermentation step.

17. A process as claimed in claim 15 or 16, wherein said mixture of texture improving agent(s) and cultured dairy product is stuffed into a shirred casing and then heated to quench the pre-fermentation of the dairy product.

18. A process as claimed in any of claims 9 to 17, wherein the pre-fermented dairy product is comminuted and then admixed with the meat.

19. A process as claimed in any of claims 9 to 17, wherein the mechanical reduction of the dairy product is performed in the presence of lean meat so that the dairy product and meat are comminuted and mixed together simultaneously.

20. A process a claimed in any of claim 9 to 19, wherein the cultured dairy product is frozen to a temperature in a range of -15 to -25°C for admixture to the meat.

21. A process as claimed in any of claims 9 to 20, wherein the mixture of meat and pre-fermented dairy product is inoculated with a starter culture and then incubated to encourage fermentation of the product.

22. A process as claimed in claim 21, wherein the product is incubated to a temperature in the range of 15 to 25°C.

23. A process as claimed in claim 21 or 22, wherein said incubation is conducted in an environment having a relative humidity in the range of 85 to 100%.

24. A process as claimed in claim 21, 22 or 23, wherein, after incubation, the product is dried and aged to a temperature in the range of 15 to 20°C under a relative humidity of about 70 to 85%.

25. A process as claimed in any of claims 9 to 20, wherein the mixture of meat and pre-fermented dairy product is acidified with a suitable acidifying agent in the matrix of the product.

26. A process as claimed in claim 25, wherein said acidifying agent is glucono-delta-lactone.

27. A process as claimed in any of claims 9 to 26, wherein the product is shaped, moulded or stuffed into shirred casings.

28. A process as claimed in any of claims 9 to 27, wherein the product is sliced.

## Patentansprüche

1. Fettarmes säurehaltiges Fleischprodukt, umfassend eine fermentierte oder angesäuerte Mischung aus mageren Fleischpartikeln und sichtbaren Partikeln aus einem vorfermentiertem Molkereiprodukt mit Kulturen und fettfreie Partikel.

2. Fleischprodukt nach Anspruch 1, bei dem das vorfermentierte Molkereiprodukt mit Kulturen ein oder mehrere Produkte umfasst, die ausgewählt sind aus Käse, Joghurt, Buttermilch, Sauerrahmmilch, saurer Milch, fermentierter Molke und Kefir.

3. Fleischprodukt nach Anspruch 1, bei dem das vorfermentierte Molkereiprodukt mit Kulturen Käse und/oder Joghurt umfasst.

4. Fleischprodukt nach Anspruch 1, bei dem die Partikel aus vorfermentiertem Molkereiprodukt mit Kulturen eine Partikelgröße im Bereich von 0.5 bis 10 mm aufweisen.

5. Fleischprodukt nach einem der vorherigen Ansprüche, bei dem die Partikel aus vorfermentiertem Molkereiprodukt mit Kulturen mindestens ein die Textur verbesserndes Mittel umfassen.

6. Fleischprodukt nach einem der vorherigen Ansprüche, bei dem die Partikel aus vorfermentiertem Molkereiprodukt mit Kulturen einen prä-biotischen Zusatz umfassen.

7. Fleischprodukt nach einem der vorherigen Ansprüche, bei dem die Partikel aus vorfermentiertem Molkereiprodukt mit Kulturen 5 bis 35 Gewichts-% der Mischung bilden.

8. Fleischprodukt nach einem der vorherigen Ansprüche, bei dem das Produkt eine in eine gekräuselte Hülle gestopfte Wurst umfasst.

9. Verfahren zum Herstellen eines fettarmen säurehaltigen Fleischprodukts nach den Ansprüchen 1 - 8, wobei das Verfahren umfasst: Vorfermentieren eines Molkereiprodukts mit Kulturen, Beenden des Vorfermentierungsschritts, Teilen des vorfermentierenden Molkereiprodukts, um kleinere Partikel zu bilden, Mischen der Partikel mit mageren Fleischpartikeln, Ausbilden der Mischung zu einem zusammenhängenden Körper, Impfen des Körpers mit einer säureweckenden Kultur und Fermentierenlassen oder Ansäuemlassen des Körpers mit einem Säuerungsmittel; wobei die Partikel des Molkereiprodukts im Endprodukt sichtbar sind.

10. Verfahren nach Anspruch 10, bei dem das Molkereiprodukt mit Kulturen ein oder mehrere Produkte umfasst, die ausgewählt sind aus Käse, Joghurt, Buttermilch, Sauerrahmmilch, saurer Milch, fermentierter Molke und Kefir.

11. Verfahren nach Anspruch 9 oder Anspruch 10, bei dem das Molkereiprodukt mit Kulturen Käse und/oder Joghurt umfasst.

12. Verfahren nach Anspruch 9 oder Anspruch 10 oder Anspruch 11, bei dem das Molkereiprodukt mit Kulturen durch Impfen mit einer geeigneten säureweckenden Kultur fermentiert wird und dies vor der Zumischung mit Fleisch durch Heizen beendet wird.

13. Verfahren nach Anspruch 12, bei dem die Vorfermentierung des Molkereiprodukts durch dessen Heizen auf eine Temperatur im Bereich von 70-75 °C oder mehr beendet wird.

14. Verfahren nach einem der Ansprüche 9 bis 13, bei dem das Molkereiprodukt mechanisch nach Fermentierung und Beenden derselben in Partikel mit der Größe im Bereich von 0.5 bis 10 mm geteilt wird.

15. Verfahren nach einem der Ansprüche 9 - 14, weiter umfassend das Zumischen von wenigstens einem die Textur verbessernden Mittel zum Molkereiprodukt.

16. Verfahren nach Anspruch 15, bei dem das wenigstens eine die Textur verbessernde Mittel im Vorfermentierungsschritt vor dem Beenden desselben hinzu gegeben wird.

17. Verfahren nach einem der Ansprüche 15 oder 16, bei dem die Mischung aus die Textur verbessernden Mittel(n) und dem Molkereiprodukt mit Kulturen in eine gekräuselte Hülle gestopft und anschließend geheizt wird, um die Vorfermentierung des Molkereiprodukts zu beenden.

18. Verfahren nach einem der Ansprüche 9 - 17, bei dem das vorfermentierte Molkereiprodukt zermahlen und anschließend dem Fleisch zugemischt wird.

19. Verfahren nach einem der Ansprüche 9 - 17, bei dem die mechanische Reduzierung des Molkereiprodukts in Anwesenheit von magerem Fleisch erfolgt, so dass das Molkereiprodukt und das Fleisch gleichzeitig zermahlen und zusammengemischt werden.

20. Verfahren nach einem der Ansprüche 9 - 19, bei dem das Molkereiprodukt mit Kulturen zum Zumischen auf eine Temperatur im Bereich von -15 °C bis -25°C des Fleisches eingefroren wird.

21. Verfahren nach einem der Ansprüche 9 - 20, bei dem die Mischung aus Fleisch und dem vorfermentierten Molkereiprodukt mit einer säureweckenden Kultur geimpft und dann inkubiert wird, um die Fermentierung des Produkts anzuregen.

22. Verfahren nach Anspruch 21, bei dem das Produkt bei einer Temperatur im Bereich von 15 bis 25 °C inkubiert wird.

23. Verfahren nach Anspruch 21 oder 22, bei dem die Inkubation in einer Umgebung durchgeführt wird, die eine relative Feuchtigkeit im Bereich von 85 bis 100% aufweist.

24. Verfahren nach Anspruch 21, 22 oder 23, bei dem das Produkt nach der Inkubation getrocknet wird und bei einer Temperatur im Bereich von 15 bis 20 °C bei einer relativen Feuchtigkeit von etwa 70 bis 85 % reift.

25. Verfahren nach einem der Ansprüche 9 - 20, bei dem die Mischung aus Fleisch und vorfermentiertem Molkereiprodukt mit einem geeigneten Säuerungsmittel in der Matrix des Produkts angesäuert wird.

26. Verfahren nach Anspruch 25, bei dem das Säuerungsmittel Gluconsäure-δ-Lacton ist.

27. Verfahren nach einem der Ansprüche 9 - 26, bei dem das Produkt in gekräuselte Hüllen geformt, gegossen oder gestopft wird.

28. Verfahren nach einem der Ansprüche 9 - 27, bei dem das Produkt in Scheiben geschnitten wird.

## Revendications

1. Produit de viande acide et faible en matières grasses, comprenant un mélange fermenté ou acidifié de particules de viande maigre et de particules visibles de produit laitier préfermenté et de culture.

2. Produit de viande selon la revendication 1, dans lequel ledit produit laitier préfermenté et de culture comprend un ou plusieurs produits choisis parmi le fromage, le yaourt, le babeurre, le lait à crème sure, le lait sur, le lactosérum fermenté et le kéfir.

3. Produit de viande selon la revendication 1, dans lequel ledit produit préfermenté et de culture comprend du fromage et/ou du yaourt.

4. Produit de viande selon la revendication 1, la revendication 2 ou la revendication 3, dans lequel les particules de produit laitier préfermenté et de culture ont une taille de particules dans la plage de 0,5 à 10 mm.

5. Produit de viande selon l'une quelconque des revendications précédentes, dans lequel les particules de produit laitier de culture comprennent un ou plusieurs agents d'amélioration de la texture.

6. Produit de viande selon l'une quelconque des revendications précédentes, dans lequel lesdites particules de produit laitier préfermenté et de culture comprennent un additif prébiotique.

7. Produit de viande selon l'une quelconque des revendications précédentes, dans lequel lesdites particules de produit laitier préfermenté et de culture constituent de 5 à 35% en poids du mélange.

8. Produit de viande selon l'une quelconque des revendications précédentes, dans lequel ledit produit comprend une saucisse farcie dans un boyau froncé.

9. Procédé de fabrication d'un produit de viande acide et faible en matières grasses, ledit procédé comprenant la préfermentation d'un produit laitier de culture, l'arrêt de l'étape de préfermentation, la division dudit produit laitier de préfermentation pour former des particules plus petites, le mélange desdites particules avec des particules de viande maigre, la mise en forme dudit mélange en un corps cohérent, l'inoculation dudit corps par une culture starter et la mise en fermentation dudit produit ou l'acidification dudit corps par un agent d'acidification ; dans lequel lesdites particules dudit produit laitier sont visibles dans le produit final.

10. Procédé selon la revendication 9, dans lequel ledit produit laitier de culture comprend un ou plusieurs produits choisis parmi le fromage, le yaourt, le babeurre, la crème sure, le lait sur, le lactosérum fermenté et le kéfir.

11. Procédé selon la revendication 9 ou la revendication 10, dans lequel ledit produit laitier de culture comprend du fromage et/ou du yaourt.

12. Procédé selon la revendication 9, la revendication 10 ou la revendication 11, dans lequel ledit produit laitier de culture est fermenté par l'inoculation par une culture starter convenable et arrêté préalablement au co-mélange avec la viande par chauffage.

13. Procédé selon la revendication 12, dans lequel la préfermentation du produit laitier est arrêtée par le chauffage de celui-ci à une température dans la plage de 70-75°C ou plus.

14. Procédé selon l'une quelconque des revendications 9 à 13, dans lequel le produit laitier est mécaniquement divisé après fermentation et arrêt jusqu'à une taille de particules dans la plage de 0,5 à 10 mm.

15. Procédé selon l'une quelconque des revendications 9 à 14, comprenant en outre le co-mélange d'un ou plusieurs agents d'amélioration de la texture avec le produit laitier.

16. Procédé selon la revendication 15, dans lequel ledit ou lesdits un ou plusieurs agents d'amélioration de la texture est(sont) ajouté(s) au produit laitier avant l'étape d'arrêt de la préfermentation.

17. Procédé selon la revendication 15 ou 16, dans lequel ledit mélange d'agent(s) d'amélioration de la texture et de produit laitier de culture est farci dans un boyau froncé, et puis chauffé pour arrêter la préfermentation du produit laitier.

18. Procédé selon l'une quelconque des revendications 9 à 17, dans lequel le produit laitier préfermenté est finement haché puis co-mélangé avec la viande.

19. Procédé selon l'une quelconque des revendications 9 à 17, dans lequel la réduction mécanique du produit laitier est réalisée en présence de viande maigre de sorte que le produit laitier et la viande soient finement hachés et mélangés simultanément.

20. Procédé selon l'une quelconque des revendications 9 à 19, dans lequel le produit laitier de culture est congelé jusqu'à une température dans la plage de -15 à -25°C pour un co-mélange avec la viande.

21. Procédé selon l'une quelconque des revendications 9 à 20, dans lequel le mélange de viande et de produit laitier préfermenté est inoculé par une culture starter et puis incubé pour favoriser la fermentation du produit.

22. Procédé selon la revendication 21, dans lequel le produit est incubé à une température dans la plage de 15 à 25°C.

23. Procédé selon la revendication 21 ou 22, dans lequel ladite incubation est réalisée dans un environnement ayant une humidité relative dans la plage de 85 à 100%.

24. Procédé selon la revendication 21, 22 ou 23, dans lequel, après incubation, le produit est séché et vieilli jusqu'à une température dans la plage de 15 à 20°C sous une humidité relative allant d'environ 70 à 85%.

25. Procédé selon l'une quelconque des revendications 9 à 20, dans lequel le mélange de viande et de produit laitier préfermenté est acidifié par un agent d'acidification convenable dans la matrice du produit.

26. Procédé selon la revendication 25, dans lequel ledit agent d'acidification est la glucono-delta-lactone.

27. Procédé selon l'une quelconque des revendications 9 à 26, dans lequel le produit est mis en forme, moulé ou farci dans des boyaux froncés.

28. Procédé selon l'une quelconque des revendications 9 à 27, dans lequel le produit est coupé en tranches.
